# EUROPÄISCHE PATENTSCHRIFT

(11) **EP 2 504 674 B1**
(45) Veröffentlichungstag und Bekanntmachung des Hinweises auf die Patenterteilung: **01.01.2020**
(21) Anmeldenummer: 10773353.7
(22) Anmeldetag: 08.11.2010
(51) Int. Cl.: G01G 11/00, G01G 13/02, B65G 21/06

(54) **WÄGE-FÖRDERVORRICHTUNG**
WEIGHING/CONVEYING DEVICE
ENSEMBLE DE PESAGE ET DE CONVOYAGE

(30) Priorität: 24.11.2009 DE 102009047090
(43) Veröffentlichungstag der Anmeldung: 03.10.2012
(73) Patentinhaber: Bizerba SE & Co. KG, 72336 Balingen (DE)
(72) Erfinder: BERGER, Hermann, 31079 Adenstedt (DE); GÖSTENKORS, Marco, Spotswood, Victoria 3015 (AU); OPPERMANN, Christian, 31135 Hildesheim (DE); HORN, Sebastian, 31162 Bad Salzdetfurth (DE)
(74) Vertreter: Hoeger, Stellrecht & Partner Patentanwälte mbB
(86) Internationale Anmeldenummer: PCT/EP2010/067037
(87) Internationale Veröffentlichungsnummer: WO 2011/064088

(56) Entgegenhaltungen:
- EP-A1- 1 715 308
- DE-A1-102006 033 651
- DE-U1-202008 014 680
- GB-A- 2 153 767
- US-A1- 2005 211 534

## Beschreibung

Die Erfindung betrifft eine Wäge-Fördervorrichtung, wie in Anspruch 1 offenbart.

Aus der DE 10 2005 006 002 A1 ist eine Kontrollwaage mit einem Maschinenkörper bekannt, wobei der Maschinenkörper aus einem rückseitigen Hohlkörper und einer frontseitigen Ausspannplatte besteht, welche den Hohlkörper zumindest an zwei einander gegenüberliegenden Seiten zumindest stellenweise überragt und so einen Befestigungsflansch bildet.

Aus der US 5,304,745 ist ein modulares Wägesystem bekannt, welches einen Zuführförderer und einen Wägeförderer umfasst, wobei über den Zuführförderer zu wiegende Gegenstände dem Wägeförderer zugeführt werden. Das entsprechende System ist modular aufgebaut.

Aus der WO 2008/125484 A1 ist eine Wäge-Fördervorrichtung zum Wiegen und zum Transport von Wägegut mit einer Fördereinrichtung, auf welcher Wägegut positionierbar ist, und einer Wägeeinrichtung, durch welche das Gewicht von Wägegut auf der Fördereinrichtung ermittelbar ist, bekannt. Die Fördereinrichtung weist ein Förderband, eine Trägereinrichtung, an welcher das Förderband geführt ist und mindestens eine Transportwalze für das Förderband auf. Die Trägereinrichtung weist einen Trägerkörper mit einer einstückig zusammenhängenden Trägerplatte auf, an welcher gegenüberliegende Seitenwangen einstückig gebildet sind. Durch die gegenüberliegenden Seitenwangen ist die mindestens eine Transportwalze gehalten.

Aus der WO 2008/006783 A1 ist eine Wagenvorrichtung mit einer Wägeeinrichtung, einer Förderbandeinrichtung, über welche der Wägeeinrichtung Wägegut zuführbar ist, einer Säule, welche als Hohlkörper ausgebildet ist und mit einer Konsole mit einer ersten Konsolenwand und einer zweiten Konsolenwand bekannt. Die erste Konsolenwand ist mit einer ersten Seitenwand des Hohlkörpers verbunden und die zweite Konsolenwand ist mit einer zweiten Seitenwand des Hohlkörpers verbunden. Die Förderbandeinrichtung und die Wägeeinrichtung sitzen an der Konsole.

Aus der US 7,307,225 B2 ist ein Stützrahmen für eine Überwachungswaage bekannt, welcher einen longitudinalen Stützrahmenteil und mindestens einen Querstützteil aufweist. Eine Wägezelle ist an dem Stützrahmen gehalten.

Aus der US 7,432,455 B2 ist ein Rahmen für eine Überwachungswaage bekannt, welcher einen longitudinalen Teil aufweist, der sich in einer longitudinalen Richtung erstreckt, und mindestens ein Querteil aufweist, welcher an dem longitudinalen Teil fixiert ist. Dieser mindestens eine Querteil dient zum Stützen des Rahmens auf einem Boden. Der mindestens eine Querteil ist ein Hohlkörper, welcher eine Füllöffnung aufweist und mit einem Ballastmaterial befüllbar ist.

Aus der EP 1 715 308 A1 ist ein Gestell für eine Kontrollwage, die eine an dem Gestell abgestützte Wägezelle und ein auf der Wägezelle abgestütztes, in einer Längsrichtung umlaufendes Wägeband zum Transport des Wägeguts aufweist, bekannt, mit einem sich in der Längsrichtung erstreckenden Längsteil des Gestells, an dem mindestens ein sich quer zur Längsrichtung erstreckendes, der Abstützung des Gestells auf dem Boden dienendes Querteil des Gestells festgelegt ist. Das Querteil ist in der Form eines Hohlkörpers ausgebildet.

Auf der DE 20 2008 014 680 U1 ist eine Transportvorrichtung modularen Aufbaus für Fördergut bekannt, die mit Hilfe einer Antriebsvorrichtung auf Führungsbahnen zu einer oder mehreren Auf- und/oder Abgabepositionen verfahrbar ist und über Verbindungselement miteinander verbundene Seitenteile umfasst. Jedes Seitenteil besteht aus mindestens einem Seitenelement, das derart ausgebildet ist, dass es zur Veränderung des Fassungsvermögens der Transportvorrichtung mit mindestens einem anderen Seitenelement zusammengeführt werden kann.

Aus der US 2005/0211534 A1 ist ein Förderer bekannt, welcher Rahmenbereiche aufweist.

Aus der GB 2 153 767 A ist eine Produktionsanlage bekannt, welche eine Mehrzahl individueller Stationen umfasst.

Der Erfindung liegt die Aufgabe zugrunde, eine Wäge-Fördervorrichtung mit modularem Aufbau bereitzustellen.

Die eingangs genannte Aufgabe wird erfindungsgemäß dadurch gelöst, dass ein Grundmodul mit mindestens zwei Aufstellelementen und mindestens zwei Querstreben vorgesehen ist und ein Erweiterungsmodul mit mindestens einem Aufstellelement und mindestens einer Querstrebe über die mindestens eine Querstrebe mit dem Grundmodul verbindbar ist, dass die Querstreben stirnseitig mit Gewindebereichen versehen sind, und dass die Aufstellelemente Befestigungsöffnungen zum Eingreifen oder Durchgreifen von Gewindebereichen der Querstreben aufweisen, wobei Querstreben einen Gewindebereich als Gewindestift mit einem Außengewinde aufweisen.

Auf diese Weise lässt sich grundsätzlich eine Wäge-Fördervorrichtung einer beliebigen Länge herstellen. Es ergibt sich ein modularer Aufbau mit einfacher Anpassbarkeit an konkrete Vorgaben.

Ferner lassen sich auf einfache Weise Zusatzvorrichtungen wie Metalldetektoren usw. integrieren. Ferner lassen sich auf einfache Weise Schränke wie Schaltschränke integrieren. Die mindestens eine Querstrebe kann dabei beispielsweise durch ein diskretes Rohrelement gebildet sein. Auch eine Schrankeinrichtung kann beispielsweise als Querstrebe dienen.

Die Aufstellelemente aus einem Plattenmaterial lassen sich auf einfache Weise herstellen. Sie weisen eine hohe Steifigkeit in einer Ebenenrichtung auf. Die Querstreben sorgen für die Quersteifigkeit.

Ein Haltebereich ist insbesondere quer zu einem Bereich des Aufstellelements außerhalb des Haltebereichs orientiert. Dadurch wird ein entsprechender Fixierungsbereich zum Halten der Wäge-Fördereinrichtung bereitgestellt. Die Wäge-Fördereinrichtung lässt sich freitragend an Aufstellelemente hängen. Dadurch lässt sich auf einfache Weise eine gute allseitige Zugänglichkeit zur Bedienung und Reinigung realisieren. Ferner lässt sich eine optimierte Krafteinleitung in eine Gestelleinrichtung erreichen.

Eine erfindungsgemäße Wäge-Fördervorrichtung genügt hohen Hygienestandards, da die Anzahl der Bauelemente gering gehalten werden kann und sich die Bauelemente optimiert an Hygieneanforderungen anpassen lassen.

Die erfindungsgemäße Wäge-Fördervorrichtung ist modular aufgebaut und lässt sich dadurch beim Aufbau oder Umbau flexibel gestalten. Beispielsweise kann ein Umbau zur Anpassung an andere Anforderungen auf einfache Weise realisiert werden.

Günstig ist es, wenn der Haltebereich einen Abkantungsbereich aufweist, welcher quer zu einer Dickenrichtung des Plattenmaterials orientiert ist und zur Fixierung der Wäge-Fördereinrichtung dient. Ein solcher Haltebereich lässt sich durch einfache Weise über Abkantung an einem Plattenmaterial bilden. Die Wäge-Fördereinrichtung lässt sich dann auf einfache Weise an einem Aufstellelement fixieren und insbesondere freitragend aufhängen.

Das Plattenmaterial ist insbesondere ein Metallblech. Dadurch lassen sich die Aufstellelemente kostengünstig auf optimierte Weise herstellen.

Eine Dicke des Plattenmaterials in der Dickenrichtung ist insbesondere kleiner als oder gleich 20 mm und insbesondere kleiner als oder gleich 15 mm. Bei einer Ausführungsform ist diese Dicke kleiner als oder gleich 10 mm und liegt beispielsweise bei 8 mm. Eine Mindestdicke liegt insbesondere bei 2 mm.

Günstig ist es, wenn der Abkantungsbereich mit Befestigungsöffnungen versehen ist, welche insbesondere in einer Reihe angeordnet sind. An diesen Befestigungsöffnungen lässt sich die Wäge-Fördereinrichtung beispielsweise über Schrauben oder Bolzen fixieren. Wenn eine Reihe von Befestigungsöffnungen vorhanden ist, dann lässt sich dadurch auch die Höhe, in welcher die Wäge-Fördereinrichtung montiert wird, variieren. Dadurch wiederum ergibt sich ein flexibler modularer Aufbau.

Günstig ist es, wenn der Fußbereich in einer Querrichtung zur Dickenrichtung eine größere Breite aufweist als der Haltebereich. Dadurch wird zum einen eine große Stellfläche bereitgestellt und zum anderen wird ein Freiraum bereitgestellt, in welchem sich eine fixierte Wäge-Fördereinrichtung positionieren lässt.

Aus diesem Grund ist es günstig, wenn zwischen dem Haltebereich und dem Fußbereich ein Freiraum zur Positionierung der Wäge-Fördereinrichtung liegt. Dadurch ist auch eine allseitige Zugänglichkeit zur Bedienung oder Reinigung möglich.

Insbesondere ist es günstig, wenn die Wäge-Fördereinrichtung höhenbeabstandet zu den Fußbereichen an den Aufstellelementen fixiert ist. Dadurch lässt sich auf einfache Weise eine gute allseitige Zugänglichkeit zur Bedienung und Reinigung realisieren. Ferner lässt sich eine optimierte Krafteinleitung in eine Gestelleinrichtung erreichen.

Insbesondere haben die Aufstellelemente eine L-förmige Gestalt mit einem ersten Schenkel und einem zweiten Schenkel, wobei der erste Schenkel und der zweite Schenkel quer zueinander orientiert sind.

Bei einer Ausführungsform sind an den jeweiligen Fußbereichen höhenverstellbare Standfüße angeordnet. Dadurch lassen sich beispielsweise Bodenunebenheiten ausgleichen.

Aus hygienischen Gründen ist es vorteilhaft, wenn der jeweilige Fußbereich eine von dem Haltebereich wegführende schräge Oberseite aufweist. Dadurch werden Bereiche vermieden, an denen sich Flüssigkeiten oder dergleichen ansammeln könne. Solche Ansammlungen können zu Bakteriennestern führen.

Aus dem gleichen Grund ist es günstig, wenn die Querstreben aus einem Vollmaterial sind. Dadurch werden Hohlräume verhindert, in denen sich Bakteriennester ausbilden können.

Es ist ferner günstig, wenn die Querstreben zumindest außerhalb Fixierungsbereichen für Aufstellelemente eine kantenfreie Außenkontur aufweisen. Durch eine glatte, kantenfreie Oberfläche lässt sich die Reinigung auf einfache Weise durchführen.

Günstig ist es, wenn Querstreben mit Aufstellelementen durch Verschrauben verbindbar sind. Dadurch lässt sich auf einfache Weise eine steife Verbindung zwischen Aufstellelementen und Querstreben erreichen. Die entsprechende Wäge-Fördervorrichtung lässt sich auf einfache Weise aufbauen und auch wieder abbauen.

Für den modularen Aufbau ist es vorgesehen, dass die Querstreben stirnseitig mit Gewindebereichen versehen sind. Mit Hilfe solcher Gewindebereiche lassen sich Querstreben an Aufstellelementen fixieren.

Die Aufstellelemente weisen Befestigungsöffnungen zum Eingreifen oder Durchgreifen von Gewindebereichen der Querstreben auf. Die Gewindebereiche können dabei grundsätzlich als Außengewinde ausgebildet sein, welche beispielsweise an Stiften angeordnet sind, oder können als Innengewinde ausgebildet sein. Ein Gewindestift kann beispielsweise an einem Gewinde an einer Befestigungsöffnung fixiert sein oder durch eine Befestigungsöffnung durchgetaucht sein und mit einer Mutter fixiert sein. Ein Gewindestift kann beispielsweise auch an einem Innengewinde einer benachbarten Querstrebe fixiert sein. Über eine an einem Aufstellelement angeordnete Gewindeeinrichtung lässt sich eine Querstrebe auf einfache Weise fixieren. Es ist dabei grundsätzlich möglich, dass eine Gewindeeinrichtung an einer Befestigungsöffnung angeordnet ist.

Es kann vorgesehen sein, dass mindestens eine Schrankeinrichtung an gegenüberliegenden Aufstellelementen fixiert ist. Die Schrankeinrichtung ist beispielsweise in Form eines Geräteschranks ausgebildet. Sie lässt sich so auf einfache Weise in die Wäge-Fördervorrichtung mit entsprechendem modularem Aufbau integrieren. Die Schrankeinrichtung kann dabei auch für eine Querstabilisierung sorgen.

Bei einer Ausführungsform sind an der Schrankeinrichtung Querstrebenelemente angeordnet, welche an den Aufstellelementen fixiert sind. Wenn die Schrankeinrichtung eine Länge (in Transportrichtung) aufweist, welche kleiner ist als der Abstand zwischen benachbarten Aufstellelementen, an denen die Schrankeinrichtung fixiert werden soll, dann lässt sich über die Querstrebenelemente der fehlende Abstand ausgleichen, um eine Fixierung zu ermöglichen. Über die Querstrebenelemente lässt sich die Schrankeinrichtung auf die gleiche Weise an Aufstellelementen fixieren wie Querstreben an den Aufstellelementen fixiert werden.

Bei der erfindungsgemäßen Lösung ist es auf einfache Weise möglich, Zusatzmodule wie beispielsweise eine Metalldetektoreinrichtung und/oder mindestens eine Pushereinrichtung und/oder mindestens eine Sortiereinrichtung zu integrieren, wobei solche Zusatzeinrichtungen insbesondere an Abkantungsbereichen der Aufstellelemente fixiert sind.

Die Wäge-Fördereinrichtung weist eine Fördereinrichtung auf, auf der Wägegut transportierbar ist, und weist eine Wägeeinrichtung auf, durch welche das Gewicht von Wägegut auf der Fördereinrichtung ermittelbar ist. Dadurch lässt sich beispielsweise ein Checkweigher realisieren, der das Gewicht von Verpackungsgut (Verpackung mit Inhalt) ermittelt und prüft, ob Abweichungen von einem Sollgewicht vorliegen.

Beispielsweise weist die Fördereinrichtung ein Transportband auf, welches Wägegut zur Wägeeinrichtung führt.
Bei einer Ausführungsform ist ein Fördereinrichtungskörper und/oder eine Wägeeinrichtungskörper mit mindestens einem längs der Wäge-Fördereinrichtung montierten Abdeckkörper versehen, welcher einen Innenraum abdeckt. Über einen solchen Abdeckkörper lässt sich der Innenraum, in dem beispielsweise eine Förderbandmechanik oder eine Wägezelle angeordnet ist, vor Verschmutzungen schützen. Der Abdeckkörper ist insbesondere als Schmutz-Leitblech ausgebildet.

Es ist vorteilhaft, wenn der mindestens eine Abdeckkörper eine von dem Fördereinrichtungskörper oder Wägeeinrichtungskörper weg schräg orientierte Oberseite aufweist. Dadurch wird das Ansammeln von Schmutz, Flüssigkeiten usw. mit der Gefahr der Ausbildung von Bakteriennestern verringert. Ein solcher Abdeckkörper lässt sich auf einfache Weise mittels eines abgekanteten Leitblechs bilden.

Die Wäge-Fördervorrichtung gemäß der erfindungsgemäßen Lösung weist einen modularen Aufbau auf. Sie lässt sich auf einfache Weise an unterschiedliche Verhältnisse unter Minimierung der Anzahl der Bauteile anpassen.

Günstig ist es, wenn eine Dichtungseinrichtung vorgesehen ist, welche an einem Anschlussbereich zweier Elemente angeordnet ist. Beispielsweise ist eine Dichtungseinrichtung am Anschluss zwischen einer Querstrebe und einem Aufstellelement angeordnet oder zwischen einem Abschlusselement und einem Aufstellelement oder zwischen einem Abschlusselement und einer Querstrebe. Durch eine entsprechende Dichtungseinrichtung, wie beispielsweise einem O-Ring, lässt sich ein hygienisch dichter Anschluss der Elemente untereinander erreichen.

Es ist ferner günstig, wenn Abschlusselemente für ein dichtes Abschließen von Befestigungsöffnungen eines Aufstellelements vorgesehen sind. Ein Abschlusselement ist beispielsweise als Blindstopfen ausgebildet. Es lassen sich dadurch nicht benötigte Anschlüsse für ein Erweiterungsmodul dicht abschließen. Dadurch wiederum erhält man einen hohen Hygienestandard.

Die nachfolgende Beschreibung bevorzugter Ausführungsformen dient im Zusammenhang mit den Zeichnungen der näheren Erläuterung der Erfindung. Es zeigen:
- Figur 1: ein erstes Ausführungsbeispiel einer erfindungsgemäßen Wäge-Fördervorrichtung in einer Teildarstellung im nicht zusammengebauten Zustand;
- Figur 2: eine perspektivische Darstellung eines zweiten Ausführungsbeispiels einer erfindungsgemäßen Wäge-Fördervorrichtung;
- Figur 3: eine Draufsicht auf die Wäge-Fördervorrichtung gemäß Figur 2;
- Figur 4: eine Seitenansicht der Wäge-Fördervorrichtung gemäß Figur 2;
- Figur 5: eine Vorderansicht der Wäge-Fördervorrichtung gemäß Figur 2;
- Figur 6: eine perspektivische Darstellung eines zweiten Ausführungsbeispiels einer erfindungsgemäßen Wäge-Fördervorrichtung;
- Figur 7: eine Vorderansicht der Wäge-Fördervorrichtung gemäß Figur 6;
- Figur 8: ein Ausführungsbeispiel eines Metalldetektors;
- Figur 9: ein drittes Ausführungsbeispiel einer Wäge-Fördervorrichtung in Teildarstellung im nicht zusammengebauten Zustand;
- Figur 10: eine Wäge-Fördervorrichtung entsprechend Figur 9 im zusammengebauten Zustand.

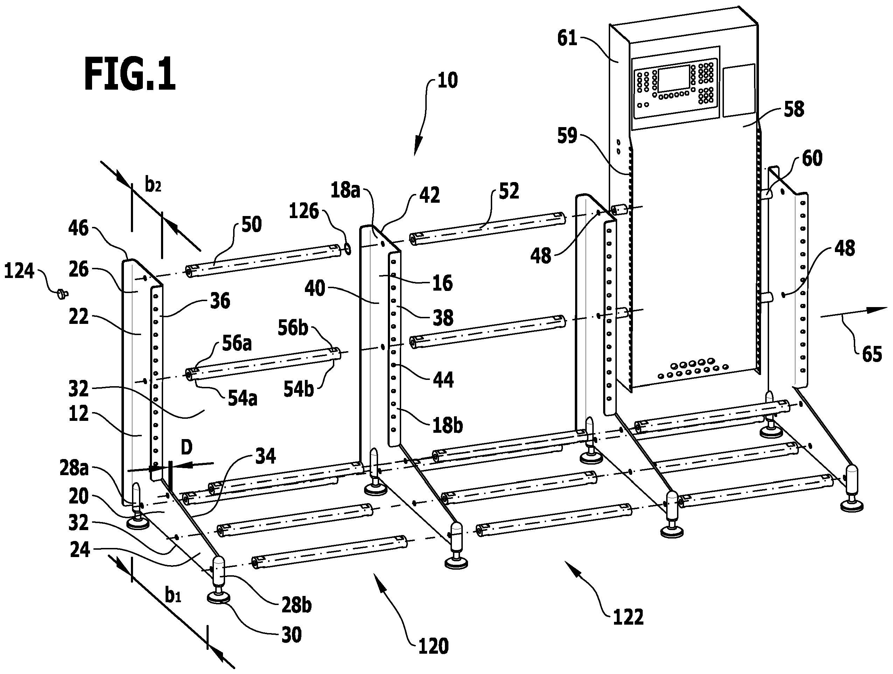

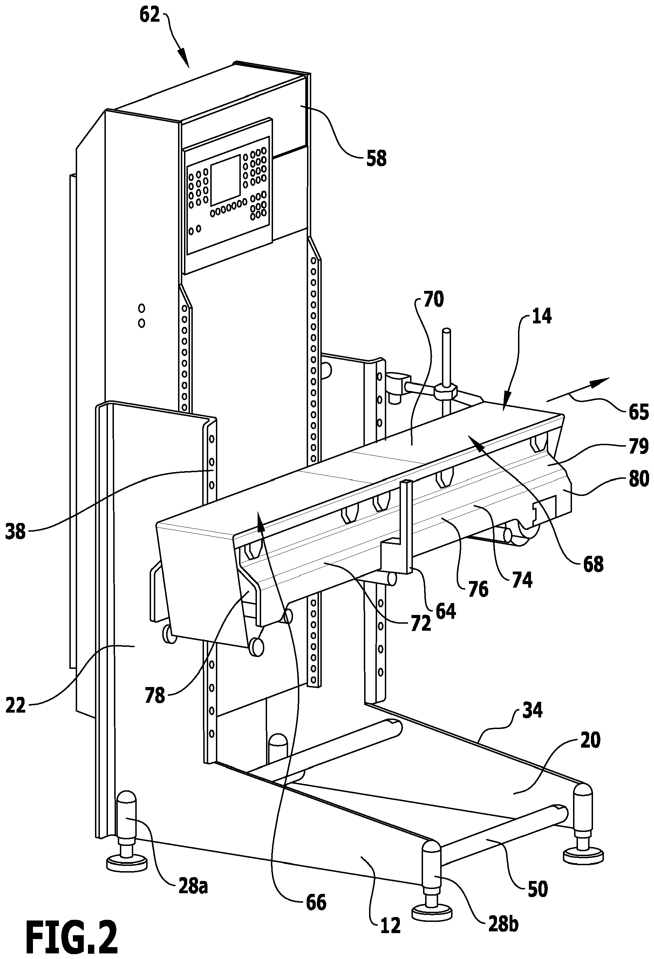

Ein Ausführungsbeispiel einer erfindungsgemäßen Wäge-Fördervorrichtung umfasst eine Gestelleinrichtung 10 (Figur 1). Die Gestelleinrichtung 10 wiederum weist eine Mehrzahl (mindestens zwei) Aufstellelemente 12 auf. Die Aufstellelemente 12 bilden Seitenträger für eine Wäge-Fördereinrichtung 14 (Figur 2; in Figur 1 ist die Wäge-Fördereinrichtung 14 nicht gezeigt).

Die Aufstellelemente 12 sind aus einem metallischen Plattenmaterial 16 und insbesondere aus einer Blechplatte hergestellt. Eine Dicke D dieses Plattenmaterials 16 liegt vorzugsweise unterhalb von 20 mm und beispielsweise unterhalb von 10 mm. Bei einer Ausführungsform beträgt die Dicke D circa 8 mm.

Das Plattenmaterial 16 für ein Aufstellelement 12 ist ein Flachmaterial, welches sich zwischen einer ersten Ebene 18a und einer zweiten Ebene 18b erstreckt. Die erste Ebene 18a und die zweite Ebene 18b sind insbesondere mindestens näherungsweise parallel zueinander. Eine Abstandsrichtung zwischen der ersten Ebene 18a und der zweiten Ebene 18b ist die Dickenrichtung.

Ein jeweiliges Aufstellelement 12 hat einen Fußbereich 20 und einen Haltebereich 22. Der Fußbereich 20 ist durch einen ersten Schenkel 24 gebildet und der Haltebereich ist durch einen zweiten Schenkel 26 gebildet, welcher quer zu dem ersten Schenkel 24 orientiert ist. Über dem Fußbereich 20 ist das Aufstellelement 12 auf einer Unterlage (einem Boden) aufgestellt. An dem Haltebereich 20 ist die Wäge-Fördereinrichtung 14 fixiert.

An dem Fußbereich 20 sind Standfüße 28a, 28b angeordnet, welche jeweils einen Standteller 30 umfassen. Die Standfüße 28a, 28b sind höhenverstellbar, das heißt, der Abstand zwischen dem Standteller 30 und einer Unterkante 32 des Fußbereichs 20, welche bei aufgestelltem Aufstellelement 12 beabstandet zu der Unterlage ist, ist feststellbar einstellbar.

Der Fußbereich 20 weist eine (maximale) Breite b₁ in einer Breitenrichtung orthogonal zur Dickenrichtung auf. Der Haltebereich 22 weist in dieser breiten Richtung eine (maximale) Breite b₂ auf. Die Breite b₂ des Haltebereichs 22 ist kleiner als die Breite b₁ des Fußbereichs 20. Dadurch ist zwischen dem Haltebereich 22 und dem Fußbereich 20 ein Freiraum 32 gebildet. In diesem lässt sich die Wäge-Fördereinrichtung 14 positionieren.

Der Fußbereich 20 weist eine Oberseite 34 auf, welche an den Freiraum 32 grenzt. Diese Oberseite hat die Dicke D. Sie läuft von dem Haltebereich 22 weg schräg nach unten (bezogen auf die Schwerkraftrichtung bei aufgestelltem Aufstellelement 12). Dadurch können Flüssigkeiten, welche auf den Fußbereich 20 treffen, sich an dieser Oberseite 34 nicht ansammeln.

An dem Haltebereich 22 des jeweiligen Aufstellelements 12 ist ein Abkantungsbereich 36 angeordnet, welcher den Freiraum 32 zu dem Haltebereich 22 hin begrenzt. Der Abkantungsbereich 36 ist durch eine Leiste 38 an Plattenmaterial 16 gebildet, welche quer und insbesondere senkrecht zu dem Bereich 40 liegt, gegenüber dem diese Leiste 38 abgekantet ist. Die Leiste 38 des Abkantungsbereichs 36 ist dabei einstückig mit dem Bereich 40 verbunden und beispielsweise an einer Kantenumformmaschine hergestellt.

Bei einem Ausführungsbeispiel (welches in Figur 1 gezeigt ist) erstreckt sich die Leiste 38 von einer Oberseite 42 des Haltebereichs 22 bis zu dem Fußbereich 20.

An der Leiste 38 des Abkantungsbereichs 36 sind Befestigungsöffnungen 44 angeordnet. Mittels diesen lässt sich die Wäge-Fördereinrichtung 14 fixieren. Die Befestigungsöffnungen 44 sind dabei insbesondere in einer Reihe angeordnet. Bei einem auf einer Unterlage korrekt aufgestellten Aufstellelement 12 ist die Leiste 38 insbesondere bezogen auf die Schwerkraftrichtung vertikal ausgerichtet und entsprechend ist die Reihe an Befestigungsöffnungen 44 vertikal ausgerichtet.

Entsprechende Achsen der Befestigungsöffnungen 44 liegen quer und insbesondere orthogonal zu der Dickenrichtung und liegen mindestens näherungsweise parallel zu der Breitenrichtung des Aufstellelements 12.

Es kann vorgesehen sein, dass ein Aufstellelement 12 dem Abkantungsbereich 36 gegenüberliegend einen weiteren Abkantungsbereich 46 aufweist. Dieser erstreckt sich insbesondere über die gesamte Höhe des Plattenmaterials 16 des Aufstellelements 12.

Ein Aufstellelement 12 ist mit weiteren Befestigungsöffnungen 48 versehen, welche in dem Bereich 40 außerhalb der Abkantungsbereiche 36 und 46 angeordnet sind. Diese Befestigungsöffnungen 48 erstrecken sich in der Dickenrichtung und dienen zur Fixierung von Querstreben 50.

Wenn die Gestelleinrichtung 10 auf einer Unterlage korrekt aufgestellt ist, dann sind die Aufstellelemente 12 mindestens näherungsweise (bezogen auf die Schwerkraftrichtung) vertikal orientiert. Querstreben 50 verbinden benachbarte Aufstellelemente 12 und sorgen für eine Querstabilisierung. Zur Bereitstellung dieser Querstabilisierung sind zwischen benachbarten Aufstellelementen 12 mehrere Querstreben vorgesehen, welche entsprechend an den Aufstellelementen 12 fixiert sind. Insbesondere sind Querstreben 50 an den jeweiligen Haltebereichen 22 und den jeweiligen Fußbereichen 20 der Aufstellelemente 12 fixiert.

Die Querstreben 50 sind aus einem Vollmaterial hergestellt, um Hohlräume zu vermeiden, in denen sich Bakteriennester bilden können. Eine Außenkontur 52 der Querstreben 50 ist kantenfrei. Insbesondere sind die Querstreben 50 an der Außenkontur 52 abgerundet. Beispielsweise sind sie zylinderförmig.

An jeweiligen stirnseitigen Enden 54a, 54b sind an den Querstreben 50 Gewindebereiche 56a, 56b angeordnet. Über diese Gewindebereiche lassen sich die Querstreben 50 an den jeweiligen Aufstellelementen 12 fixieren.

Insbesondere lassen sich Gewindebereiche durch jeweilige Befestigungsöffnungen 44 an den Aufstellelementen 12 eintauchen oder durchtauchen.

Beispielsweise ist an einer Seite einer Querstrebe 50 ein Gewindebereich als Gewindestift mit einem Außengewinde ausgebildet. Wenn eine Befestigungsöffnung 44 als Gewindeeinrichtung ein Innengewinde aufweist, dann lässt sich die Querstrebe 50 hier verschrauben. Die Querstrebe 50 kann auch, wenn die Befestigungsöffnung 44 kein Innengewinde aufweist, über eine Mutter an dem Aufstellelement 12 fixiert werden.

Es ist auch möglich, dass ein Gewindebereich ein Innengewinde aufweist, in den ein Gewindestift einer anderen Querstrebe eingreifen kann, wobei dieser Gewindestift durch eine Befestigungsöffnung 48 in einem Aufstellelement 12 durchgreift.

Die Querstreben 50 sind insbesondere aus einem metallischen Material hergestellt und einstückig ausgebildet.

Bei aufgestellter Gestelleinrichtung 10 sind die Querstreben 50 vorzugsweise zumindestens näherungsweise horizontal (bezogen auf die Schwerkraftrichtung) orientiert. Sie sind längs einer Transportrichtung 65 der Wäge-Fördereinrichtung orientiert. Ferner sind sie quer und insbesondere orthogonal zu den Aufstellelementen 12 (zu deren Bereichen 40) orientiert. Insbesondere sind sie mindestens näherungsweise parallel zu einer Dickenrichtung der Aufstellelemente 12 orientiert.

Über die Aufstellelemente 12 und die Querstreben 50 lässt sich die Gestelleinrichtung 10 und damit die Wäge-Fördervorrichtung modular aufbauen. Durch entsprechende Längenauswahl der Querstreben 50 lässt sich der Abstand zwischen den Aufstellelementen 12 einstellen. Dieser Abstand kann dann beispielsweise in Abhängigkeit von Wägegut beziehungsweise Fördergut eingestellt werden.

Die Wäge-Fördereinrichtung 40 lässt sich in den Leisten 38 in einer gewünschten Höhe fixieren. Die höhenverstellbaren Standfüße 28a, 28b erlauben ebenfalls eine Einstellbarkeit mit leichter Ausgleichsmöglichkeit für eine horizontale Aufstellung.

Zwischen benachbarten Aufstellelementen 12 kann eine Schrankeinrichtung 58 positioniert sein. Die Schrankeinrichtung 58, welche beispielsweise ein Steuerungsgerät und/oder Anzeigegerät aufnehmen kann, ist bei einem Ausführungsbeispiel auf grundsätzlich gleiche Weise an Aufstellelementen 12 fixiert wie Querstreben 50. Dazu sind an der Schrankeinrichtung 58 Querstrebenelemente 60 angeordnet, welche quer zu den Aufstellelementen 12 fixiert sind. Die Querstrebenelemente 60 sind über Befestigungsöffnungen 48 an den benachbarten Aufstellelementen 12 fixiert. Durch entsprechende Längenwahl der Querstrebenelemente 60 lässt sich eine vorgegebene Schrankeinrichtung 58 an ein Abstandsraster für die Aufstellelemente 12 anpassen.

An der Schrankeinrichtung 58 ist an gegenüberliegenden Seiten eine Lochleiste 59 angeordnet, wobei Öffnungen dieser Lochleiste 59 eine Durchgangsrichtung aufweisen, welche parallel zur Dickenrichtung der Aufstellelemente 12 ist. An diesen Lochleisten 59 lassen sich die Querstrebenelemente 60 fixieren. Die Lochleisten sind beispielsweise durch Fortsetzung von entsprechenden Seitenwänden 61 der Schrankeinrichtung 58 gebildet.

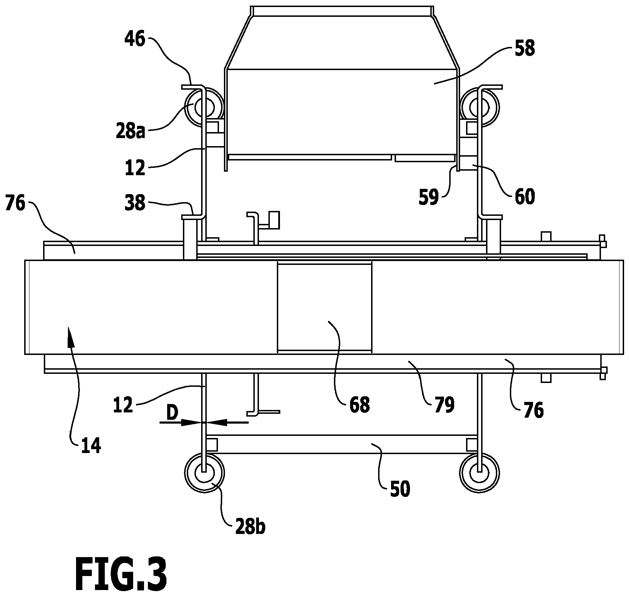

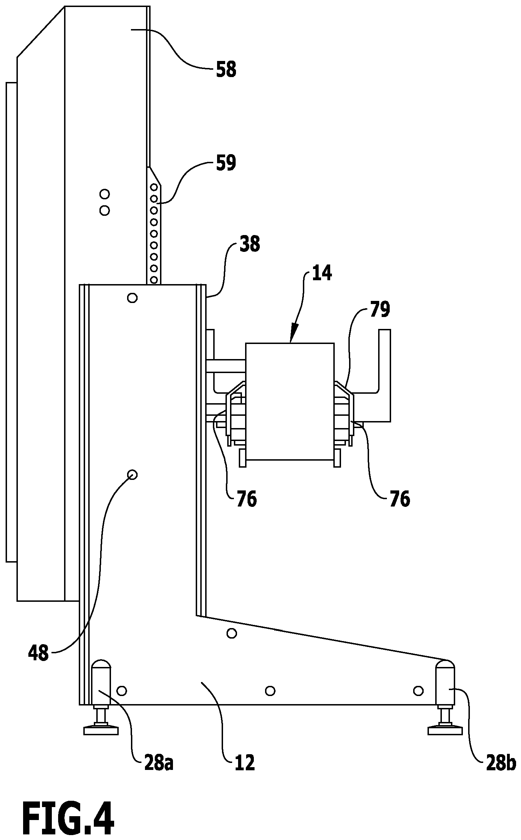

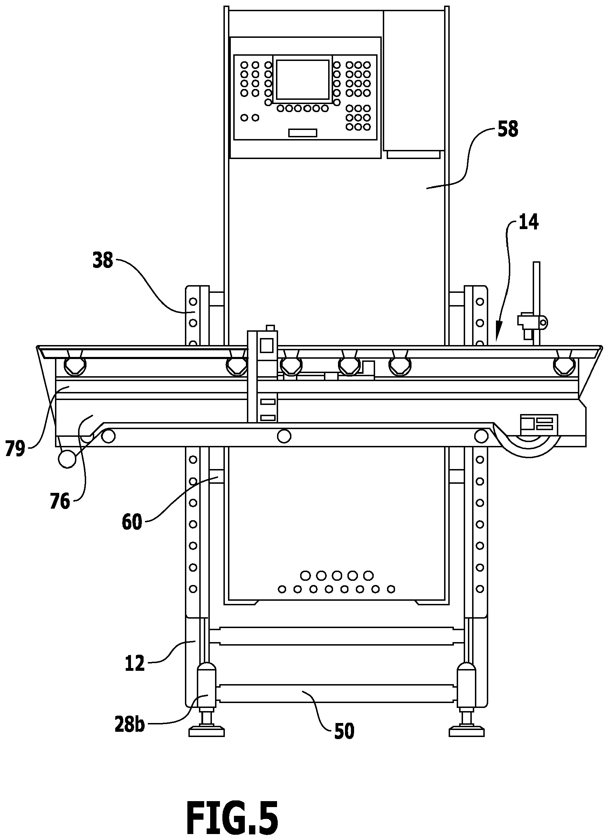

Bei einem Ausführungsbeispiel einer Wäge-Fördervorrichtung, welches in den Figuren 2 bis 5 gezeigt und dort mit 62 bezeichnet ist, ist die Wäge-Fördereinrichtung 14 an gegenüberliegenden Aufstellelementen 12 fixiert. An diesen gegenüberliegenden Aufstellelementen 12 ist ferner eine Schrankeinrichtung entsprechend der Schrankreinrichtung 58 fixiert. Diese Schrankeinrichtung 58 ist dabei bezüglich der Leisten 38 der jeweiligen Haltebereiche 22 zurückgesetzt.

Die Wäge-Fördereinrichtung 62 ist über Schrauben oder dergleichen an Befestigungsöffnungen 44 der Leisten 38 montiert. Die Wäge-Fördereinrichtung 62 ist dabei an den jeweiligen Leisten 38 der beiden Aufstellelementen 12 fixiert. Die Wäge-Fördereinrichtung 62 ist freitragend hängend an den Aufstellelementen 12 angeordnet. Eine Unterseite 64 der Wäge-Fördereinrichtung 62 ist höhenbeabstandet zu dem jeweiligen Fußbereich 20 der Aufstellelemente 12 mit der schrägen Oberseite 34.

Die Wäge-Fördereinrichtung 62 umfasst eine Fördereinrichtung 66 und eine Wägeeinrichtung 68. Wägegut lässt sich über die Fördereinrichtung 66 der Wägeeinrichtung 68 zum Wiegen zuführen und von der Wägeeinrichtung 68 abführen.

Die Fördereinrichtung 66 umfasst beispielsweise ein Transportband 70 in Form eines Endlosbandes. Die Fördereinrichtung 66 umfasst ferner einen Fördereinrichtungskörper (Förderbandkörper) 72 und einen Wägeeinrichtungskörper (Wägebandkörper) 74. Die Fördereinrichtung 66 und die Wägeeinrichtung 68 sind mit entsprechenden Transportelementen mit Transportrollen mit entsprechender Antriebseinrichtung versehen. Die Wägeeinrichtung 68 ist ferner mit einer Wägezelle versehen. Der Wägeeinrichtung 68 ist eine entsprechende Auswertungseinrichtung zugeordnet.

Die Fördereinrichtung 66 und die Wägeeinrichtung 68 umfassen Abdeckkörper 76, welche längs der Transportrichtung 65 orientiert sind. Diese Abdeckkörper 76 decken Innenräume 78 der Wäge-Fördereinrichtung 14 nach außen hin ab. Die Abdeckung erfolgt seitlich (bezogen auf die Transportrichtung 65) nach vorne und nach hinten zu der Schrankeinrichtung 58 hin.

Die Abdeckkörper 76 weisen dabei eine Oberseite 79 auf, welche von dem jeweiligen Fördereinrichtungskörper 72 und Wägeeinrichtungskörper 74 weg schräg nach unten orientiert ist. Sie weisen ferner eine jeweilige Außenseite 80 auf, gegenüber welcher die Oberseite 79 abgekantet ist.

Durch die Abdeckkörper 76 werden Schmutz-Leitbleche gebildet, welche das Eindringen von Schmutz in die Innenräume 78 zumindest verringern. Dadurch lassen sich Verschmutzungen der Wägezelle der Wägeeinrichtung 68, welche in dem entsprechenden Innenraum 78 angeordnet ist, sowie Verschmutzungen einer Fördereinrichtungsmechanik zumindest verringern.

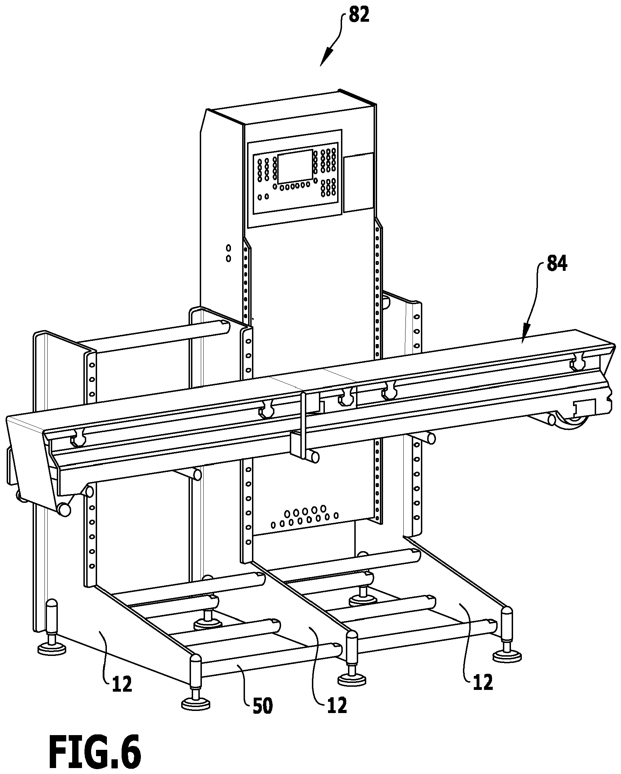

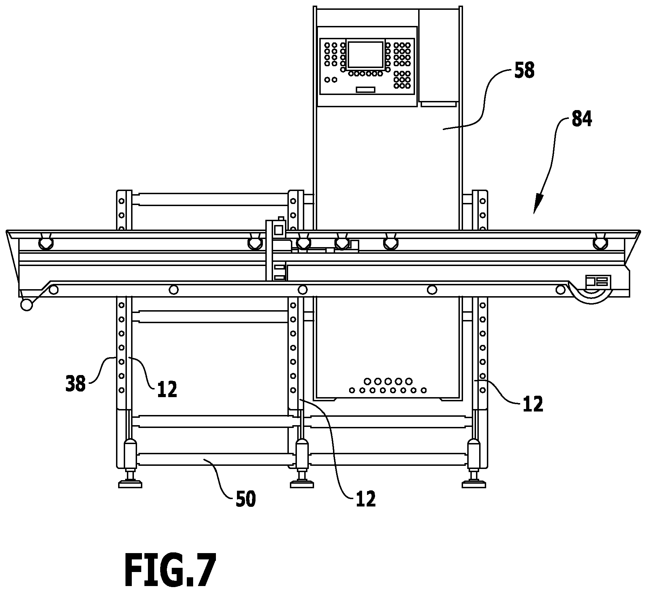

Die Gestelleinrichtung 10 und damit auch die entsprechende Wäge-Fördervorrichtung lässt sich flexibel modular aufbauen. Bei einem Ausführungsbeispiel, welches in den Figuren 6 und 7 und dort mit 82 bezeichnet ist, sind drei Aufstellelemente 12 vorgesehen, wobei benachbarte Aufstellelemente 12 über Querstreben 50 verbunden sind. Eine Wäge-Fördereinrichtung 84 ist mit den drei Aufstellelementen 12 verbunden. Durch Auswahl der Anzahl der Aufstellelemente 12 lässt sich eine beliebige Länge für die Wäge-Fördereinrichtung 84 realisieren.

Ansonsten entspricht die Wäge-Fördervorrichtung 82 in ihrem grundsätzlichen Aufbau der oben beschriebenen Wäge-Fördervorrichtung 62.

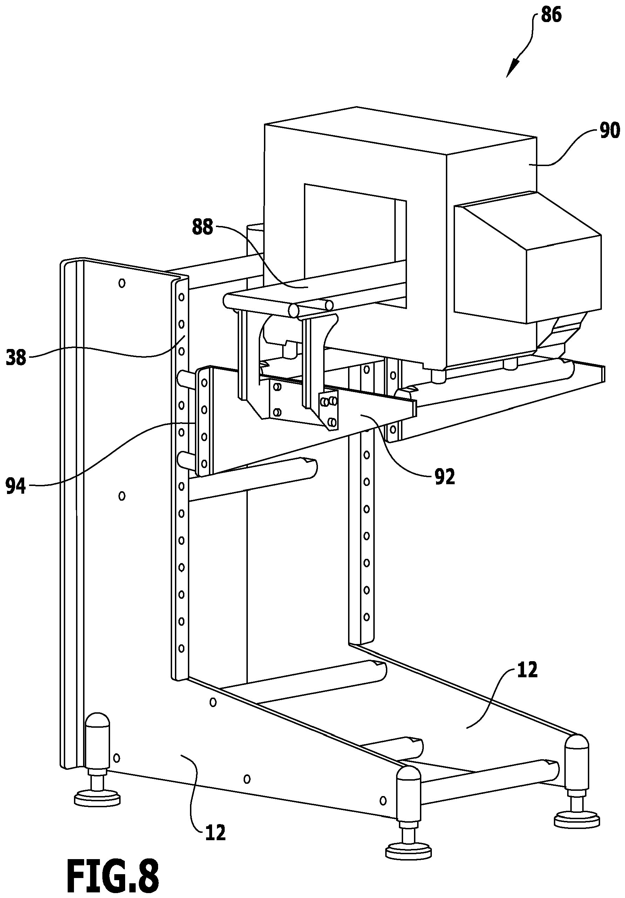

Bei einer Ausführungsform ist in eine Wäge-Fördervorrichtung eine Metalldetektoreinrichtung 86 (Figur 8) integriert. Diese Metalldetektoreinrichtung 86 weist eine Fördereinrichtung 88 auf, durch welche sich Transportgut (Wägegut) durch einen Metalldetektor 90 durchführen lässt.

Die Metalldetektoreinrichtung 86 weist Halteelemente 92 auf, an welchen der Metalldetektor 90 und die Fördereinrichtung 88 fixiert sind. Über die Halteelemente 92 ist die Metalldetektoreinrichtung 86 wiederum an Aufstellelementen 12 fixiert.

Dazu weisen die Halteelemente 92 beispielsweise Leisten 94 auf, wobei beispielsweise über Schrauben eine Verbindung einer Leiste 94 des Halteelements 92 mit einer Leiste 38 des entsprechenden Aufstellelements 12 erfolgt.

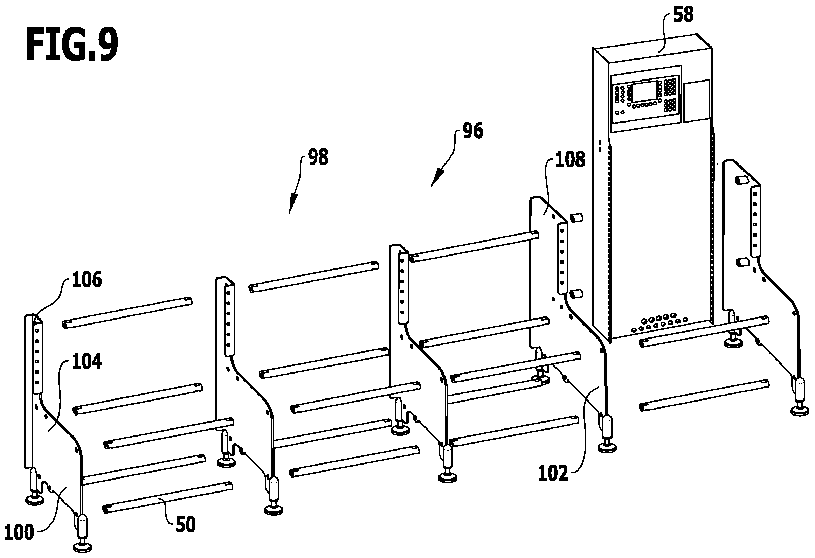

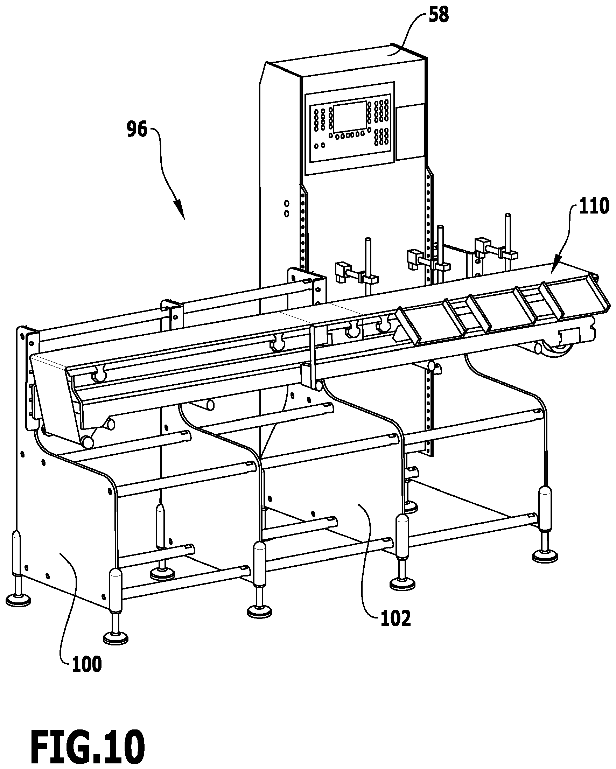

Bei einem Ausführungsbeispiel, welches in den Figuren 9 und 10 gezeigt und dort mit 96 bezeichnet ist, umfasst eine Gestelleinrichtung 98 Aufstellelemente 100 eines ersten Typs und Aufstellelemente 102 eines zweiten Typs. Die Aufstellelemente 100 weisen wiederum einen Fußbereich 104 und einen Haltebereich 106 auf. Der Fußbereich 104 ist so ausgebildet, dass an ihm höhenversetzt Querstreben 50 fixiert werden können. Der Fußbereich 104 eines Aufstellelements 100 weist eine größere Höhe auf als der Fußbereich 20 eines Aufstellelements 12.

Ansonsten ist ein Aufstellelement 100 gleich ausgebildet wie ein Aufstellelement 12.

Ein Aufstellelement 102 des zweiten Typs ist grundsätzlich ausgebildet wie ein Aufstellelement 100, wobei es jedoch breiter ist als ein Aufstellelement 100. Dadurch lässt sich für ein Aufstellelement 102 ein Haltebereich 108 mit einer größeren Breite beispielsweise zur Fixierung einer Schrankeinrichtung 58 bereitstellen.

An den Aufstellelementen 100 und 102 ist eine Wäge-Fördereinrichtung 110 fixiert. Die Schrankeinrichtung 58 ist zwischen benachbarten Aufstellelementen 102 fixiert.

Ansonsten entspricht der Aufbau den oben beschriebenen Ausführungsbeispielen.

Die erfindungsgemäße Wäge-Fördervorrichtung funktioniert wie folgt:
Es wird eine Gestelleinrichtung (beispielsweise die Gestelleinrichtung 10) aus Aufstellelementen 12 und Querstreben 15 aufgebaut. Die Aufstellelemente 12 sind als Plattenelemente 16 ausgebildet und diese weisen entsprechend eine hohe Steifigkeit bezüglich ebener Krafteinleitung auf. Für die Quersteifigkeit sorgen die Querstreben 50.

Aufgrund der Abkantungsbereiche 36 der Aufstellelemente 12 lässt sich eine Wäge-Fördereinrichtung 14 freitragend hängend an der Gestelleinrichtung 10 fixieren.

Es ergibt sich eine hohe Flexibilität aufgrund des modularen Aufbaus der Gestelleinrichtung 10.

Benachbarte Aufstellelemente mit den Querstreben 50 bilden Module, wobei sich grundsätzlich eine beliebige Anzahl von Modulen kombinieren lässt. Es lassen sich unterschiedliche funktionale Module anbinden, wie beispielsweise ein Metalldetektoreinrichtungs-Modul, Pushereinrichtungs-Modul und/oder Sortierereinrichtungsmodul.

Durch das freitragende Aufhängen der Wäge-Fördereinrichtung 14 an den Aufstellelementen 12 ergibt sich eine gute allseitige Zugänglichkeit zur Bedienung und Einigung der Wäge-Fördereinrichtung 14.

Die Abdeckkörper 76 verhindern das Eindringen von Schmutz in die Innenräume 78.

Es lässt sich ein hoher Hygienestandard realisieren, da Bereiche, in denen sich Bakteriennester bilden können, minimiert sind.

Eine erfindungsgemäße Wäge-Fördervorrichtung lässt sich als Checkweigher realisieren. Mit einem solchen Checkweigher, welcher insbesondere am Ende einer Verpackungsstraße angeordnet ist, lässt sich das Gewicht einer Packung (Verpackung samt Inhalt) bestimmen und prüfen, ob das Gewicht innerhalb eines vorgegebenen Bereichs liegt.

Bei der Gewichtsbestimmung von Wägegut an einer Wägeeinrichtung 68 ist es wichtig, dass das entsprechende Wägegut von der Wägeeinrichtung 68 vollständig aufgenommen ist. Die Größe der Wägeeinrichtung 68 muss deshalb an das Wägegut angepasst sein unter Berücksichtigung der Durchlaufrate von Wägegut in der Fördereinrichtung 66. Durch die erfindungsgemäße Lösung lässt sich auf einfache Weise beim Aufbau oder beim Umbau eine solche Anpassung erreichen.

Bei der erfindungsgemäßen Lösung lässt sich über mindestens zwei Aufstellelemente 12 und Querstreben 50 ein Grundmodul 120 (Figur 1) realisieren. Dieses Grundmodul 120 ist selbstständig auf der Unterlage aufstellbar. An ein solches Grundmodul 120 kann ein Erweiterungsmodul 122 angeschlossen werden. Das Erweiterungsmodul weist dabei ein Aufstellelement entsprechend dem Aufstellelement 12 und mindestens eine Querstrebe auf. Über die Querstrebe beispielsweise des Typs 50 lässt sich das Erweiterungsmodul 122 mit dem Grundmodul 120 verbinden. Grundsätzlich lassen sich dadurch beliebig viele Erweiterungsmodule an ein Grundmodul beziehungsweise an eine Grundmodul-Erweiterungsmodul-Kombination anschließen. Dadurch lässt sich eine Wäge-Fördervorrichtung einer beliebigen Länge realisieren; diese lässt sich angepasst an die Anwendung aufbauen. Ferner lassen sich dadurch auf einfache Weise Zusatzvorrichtungen wie beispielsweise eine Metalldetektorvorrichtung anschließen.

Ein Erweiterungsmodul lässt sich auf einfache Weise über eine oder mehrere Querstreben mit dem Grundmodul durch Verschrauben verbinden.

Es ist in diesem Zusammenhang günstig, wenn Abschlusselemente 124 beispielsweise in Form von Blindstopfen vorgesehen sind. Durch diese können beispielsweise Befestigungsöffnungen 48 an Aufstellelementen 12 dicht geschlossen werden. Grundsätzlich können auch Abschlusselemente 124 für Befestigungsöffnungen 44 vorgesehen werden.

Es ist ferner günstig, wenn Dichtungseinrichtungen 126 vorgesehen sind, welche zum dichtenden Anschluss zwischen angeschlossenen Elementen dienen. Beispielsweise ist eine Dichtungseinrichtung in Form eines O-Rings zwischen einer Querstrebe 50 und einem entsprechenden Aufstellelement 12 vorgesehen.

Es kann beispielsweise auch eine Dichtungseinrichtung 126 einem Abschlusselement 124 zugeordnet sein oder in dieses integriert sein.

Durch Dichtungseinrichtungen 126 lässt sich der Hygienestandard erhöhen.

## Patentansprüche

1. Wäge-Fördervorrichtung, umfassend
- Aufstellelemente (12; 100; 102) aus einem Plattenmaterial (16),
- Querstreben (50), welche mit benachbarten Aufstellelementen (12; 100; 102) verbunden sind, und
- eine Wäge-Fördereinrichtung (14), welche an Aufstellelementen (12; 100; 102) gehalten ist,
wobei die Aufstellelemente (12; 100; 102) jeweils einen Fußbereich (20) aufweisen, über den sie auf einer Unterlage aufgestellt sind, und einen Haltebereich (22) aufweisen, an welchem die Wäge-Fördereinrichtung (14) gehalten ist, **dadurch gekennzeichnet, dass** ein Grundmodul (120) mit mindestens zwei Aufstellelementen (12) und mindestens zwei Querstreben (50) vorgesehen ist und ein Erweiterungsmodul (122) mit mindestens einem Aufstellelement (12) und mindestens einer Querstrebe (50) über die mindestens eine Querstrebe (50) mit dem Grundmodul (120) verbindbar ist, dass die Querstreben (50) stirnseitig mit Gewindebereichen (56a; 56b) versehen sind, und dass die Aufstellelemente (12) Befestigungsöffnungen (48) zum Eingreifen oder Durchgreifen von Gewindebereichen der Querstreben (50) aufweisen, wobei Querstreben (50) einen Gewindebereich als Gewindestift mit einem Außengewinde aufweisen.

2. Wäge-Fördervorrichtung nach Anspruch 1, **dadurch gekennzeichnet, dass** der Haltebereich (22) einen Abkantungsbereich (36) aufweist, welcher quer zu einer Dickenrichtung des Plattenmaterials (16) orientiert ist und zur Fixierung der Wäge-Fördereinrichtung (14) dient, und insbesondere, dass der Abkantungsbereich (36) mit Befestigungsöffnungen (44) versehen ist, welche insbesondere in einer Reihe angeordnet sind.

3. Wäge-Fördervorrichtung nach einem der vorangehenden Ansprüche, **dadurch gekennzeichnet, dass** das Plattenmaterial (16) ein Metallblech ist, und insbesondere, dass eine Dicke (D) des Plattenmaterials (16) in Dickenrichtung kleiner als oder gleich 20 mm ist.

4. Wäge-Fördervorrichtung nach einem der vorangehenden Ansprüche, **dadurch gekennzeichnet, dass** der Fußbereich (20) in einer Querrichtung zur Dickenrichtung eine größere Breite (b1) aufweist als der Haltebereich (22), und insbesondere, dass zwischen dem Haltebereich (22) und dem Fußbereich (20) ein Freiraum (32) zur Positionierung der Wäge-Fördereinrichtung (14) liegt.

5. Wäge-Fördervorrichtung nach einem der vorangehenden Ansprüche, **dadurch gekennzeichnet, dass** die Wäge-Fördereinrichtung (14) freitragend an den Aufstellelementen (12; 100; 102) hängt und höhenbeabstandet zu den Fußbereichen (20) an den Aufstellelementen (12; 100; 102) fixiert ist, und insbesondere, dass die Aufstellelemente (12; 100; 102) eine L-förmige Gestalt aufweisen.

6. Wäge-Fördervorrichtung nach einem der vorangehenden Ansprüche, **dadurch gekennzeichnet, dass** der jeweilige Fußbereich (20) eine von dem Haltebereich (22) wegführende schräge Oberseite (34) aufweist.

7. Wäge-Fördervorrichtung nach einem der vorangehenden Ansprüche, **dadurch gekennzeichnet, dass** die Querstreben (50) zumindest außerhalb Fixierungsbereichen für Aufstellelemente (12) eine kantenfreie Außenkontur (52) aufweisen.

8. Wäge-Fördervorrichtung nach einem der vorangehenden Ansprüche, **dadurch gekennzeichnet, dass** die Aufstellelemente (12) eine Gewindeeinrichtung zum Eingreifen oder Durchgreifen von Gewindebereichen der Querstreben (50) aufweisen.

9. Wäge-Fördervorrichtung nach einem der vorangehenden Ansprüche, **gekennzeichnet durch** mindestens eine Schrankeinrichtung (58), welche an gegenüberliegenden Aufstellelementen (12) fixiert ist, und insbesondere, dass an der Schrankeinrichtung (58) Querstrebenelemente (60) angeordnet sind, welche an den Aufstellelementen fixiert sind.

10. Wäge-Fördervorrichtung nach einem der vorangehenden Ansprüche, **gekennzeichnet durch** mindestens eine Metalldetektoreinrichtung (86) und/oder mindestens eine Pushereinrichtung und/oder mindestens eine Sortiereinrichtung, welche an Abkantungsbereichen (36) fixiert ist.

11. Wäge-Fördervorrichtung nach einem der vorangehenden Ansprüche, **dadurch gekennzeichnet, dass** die Wäge-Fördereinrichtung (14) eine Fördereinrichtung (66), auf der Wägegut transportierbar ist, und eine Wägeeinrichtung (68), durch welche das Gewicht von Wägegut auf der Fördereinrichtung (14) ermittelbar ist, umfasst, und insbesondere, dass die Fördereinrichtung (66) ein Transportband (70) aufweist.

12. Wäge-Fördervorrichtung nach Anspruch 11, **dadurch gekennzeichnet, dass** ein Fördereinrichtungskörper (72) und/oder ein Wägeeinrichtungskörper (74) mit mindestens einem längs der Wäge-Fördereinrichtung (14) orientiertem Abdeckkörper (76) versehen ist, welcher einen Innenraum (78) abdeckt, und insbesondere, dass der mindestens eine Abdeckkörper (76) eine von dem Fördereinrichtungskörper (72) oder Wägeeinrichtungskörper (74) weg schräg orientierte Oberseite aufweist.

13. Wäge-Fördervorrichtung nach einem der vorangehenden Ansprüche, **gekennzeichnet durch** einen modularen Aufbau.

14. Wäge-Fördervorrichtung nach einem der vorangehenden Ansprüche, **gekennzeichnet durch** eine Dichtungseinrichtung (126), welche an einem Anschlussbereich zweier Elemente (12; 50; 124; 12) angeordnet ist.

15. Wäge-Fördervorrichtung nach einem der vorangehenden Ansprüche, **gekennzeichnet durch** Abschlusselemente (124) für ein dichtes Abschließen von Befestigungsöffnungen (46).

## Claims

1. Weighing/conveying apparatus, comprising
- stand elements (12; 100; 102) from a plate material (16),
- transverse struts (50) which are connected to adjacent stand elements (12; 100; 102), and
- a weighing/conveying device (14) which is held on stand elements (12; 100; 102),
wherein the stand elements (12; 100; 102) each have a foot region (20) by way of which they are placed on a base, and a holding region (22) on which the weighing/conveying device (14) is held, **characterized in that** a base module (120) with at least two stand elements (12) and at least two transverse struts (50) is provided, and an expansion module (122) with at least one stand element (12) and at least one transverse strut (50) by way of which at least one transverse strut (50) is connectible to the base module (120), **in that** the transverse struts (50) are provided frontally with threaded regions (56a; 56b), and **in that** the stand elements (12) have fastening openings (48) for the engagement or passing through of threaded regions of the transverse struts (50), wherein transverse struts (50) have a threaded region as a threaded pin with an external threading.

2. Weighing/conveying apparatus in accordance with Claim 1, **characterized in that** the holding region (22) has a bent edge region (36) which is oriented transversely to a thickness direction of the plate material (16) and serves to fix the weighing/conveying device (14), and in particular **in that** the bent edge region (36) is provided with fastening openings (44) which are arranged in particular in a row.

3. Weighing/conveying apparatus in accordance with any one of the preceding Claims, **characterized in that** the plate material (16) is a metal sheet, and in particular **in that** a thickness (D) of the plate material (16) in the thickness direction is less than or equal to 20 mm.

4. Weighing/conveying apparatus in accordance with any one of the preceding Claims, **characterized in that** the foot region (20) has a greater width (b1) in a transverse direction to the thickness direction than the holding region (22), and in particular **in that** a free space (32) for positioning the weighing/conveying device (14) is located between the holding region (22) and the foot region (20).

5. Weighing/conveying apparatus in accordance with any one of the preceding Claims, **characterized in that** the weighing/conveying device (14) hangs cantilever on the stand elements (12; 100; 102) and is fixed on the stand elements (12; 100; 102) at a distance from the foot regions (20) in the height direction, and in particular **in that** the stand elements (12; 100; 102) have an L-shaped form.

6. Weighing/conveying apparatus in accordance with any one of the preceding Claims, **characterized in that** the respective foot region (20) has an inclined top side (34) leading away from the holding region (22).

7. Weighing/conveying apparatus in accordance with any one of the preceding Claims, **characterized in that** the transverse struts (50) have an edge-free outer contour (52) at least outside of fixing regions for stand elements (12).

8. Weighing/conveying apparatus in accordance with any one of the preceding Claims, **characterized in that** the stand elements (12) have a threaded device for the engagement or passing through of threaded regions of the transverse struts (50).

9. Weighing/conveying apparatus in accordance with any one of the preceding Claims, **characterized by** at least one cabinet device (58) which is fixed on opposite stand elements (12), and in particular in that arranged on the cabinet device (58) are transverse strut elements (60) which are fixed on the stand elements.

10. Weighing/conveying apparatus in accordance with any one of the preceding Claims, **characterized by** at least one metal detector device (86) and/or at least one pusher device and/or at least one sorting device which is/are fixed on bent edge regions (36).

11. Weighing/conveying apparatus in accordance with any one of the preceding Claims, **characterized in that** the weighing/conveying device (14) comprises a conveying device (66) on which goods to be weighed are transportable and a weighing device (68) by means of which the weight of goods to be weighed on the conveying device (14) is determinable, and in particular **in that** the conveying device (66) has a conveyor belt (70).

12. Weighing/conveying apparatus in accordance with Claim 11, **characterized in that** a conveying device body (72) and/or a weighing device body (74) is provided with at least one covering body (76) which is oriented along the weighing/conveying device (14) and covers an inner space (78), and in particular **in that** the at least one covering body (76) has a top side oriented inclined away from the conveying device body (72) or weighing device body (74).

13. Weighing/conveying apparatus in accordance with any one of the preceding Claims, **characterized by** a modular construction.

14. Weighing/conveying apparatus in accordance with any one of the preceding Claims, **characterized by** a sealing device (126) which is arranged on a connection region of two elements (12; 50; 124; 12).

15. Weighing/conveying apparatus in accordance with any one of the preceding Claims, **characterized by** closing elements (124) for sealingly closing fastening openings (46).

## Revendications

1. Dispositif de pesage et de convoyage, comprenant
- des éléments de pose (12 ; 100 ; 102) composés d'un matériau plat (16),
- des traverses (50), lesquelles sont reliées à des éléments de pose (12 ; 100 ; 102) voisins, et
- un équipement de pesage et de convoyage (14), lequel est retenu sur des éléments de pose (12 ; 100 ; 102),
dans lequel les éléments de pose (12 ; 100 ; 102) présentent respectivement une zone de pied (20), par l'intermédiaire de laquelle ils sont posés sur un sol, et une zone de retenue (22), sur laquelle l'équipement de pesage et de convoyage (14) est retenu, **caractérisé en ce qu'**un module de base (120) est pourvu d'au moins deux éléments de pose (12) et d'au moins deux traverses (50) et un module d'extension (122) pourvu d'au moins un élément de pose (12) et d'au moins une traverse (50) peut être relié au module de base (120) par l'intermédiaire de la au moins une traverse (50), **en ce que** les traverses (50) sont pourvues frontalement de zones filetées (56a ; 56b), et **en ce que** les éléments de pose (12) présentent des ouvertures de fixation (48) pour l'insertion ou le passage de zones filetées des traverses (50), dans lequel les traverses (50) présentent une zone filetée comme tige filetée pourvue d'un filetage extérieur.

2. Dispositif de pesage et de convoyage selon la revendication 1, **caractérisé en ce que** la zone de retenue (22) présente une zone de chanfrein (36), laquelle est orientée transversalement à une direction d'épaisseur du matériau plat (16) et sert à la fixation de l'équipement de pesage et de convoyage (14), et en particulier **en ce que** la zone de chanfrein (36) est pourvue d'ouvertures de fixation (44), lesquelles sont disposées en particulier sur une rangée.

3. Dispositif de pesage et de convoyage selon l'une quelconque des revendications précédentes, **caractérisé en ce que** le matériau plat (16) est une tôle métallique, et en particulier **en ce qu'**une épaisseur (D) du matériau plat (16) dans la direction d'épaisseur est inférieure ou égale à 20 mm.

4. Dispositif de pesage et de convoyage selon l'une quelconque des revendications précédentes, **caractérisé en ce que** la zone de pied (20) présente dans une direction transversale par rapport à la direction d'épaisseur une largeur (b1) plus grande que la zone de retenue (22), et en particulier **en ce qu'**un espace libre (32) permettant le positionnement de l'équipement de pesage et de convoyage (14) se situe entre la zone de retenue (22) et la zone de pied (20).

5. Dispositif de pesage et de convoyage selon l'une quelconque des revendications précédentes, **caractérisé en ce que** l'équipement de pesage et de convoyage (14) est suspendu de manière auto-portante sur les éléments de pose (12 ; 100 ; 102) et est fixé aux éléments de pose (12 ; 100 ; 102) à distance en hauteur des zones de pied (20), et en particulier **en ce que** les éléments de pose (12 ; 100 ; 102) présentent une configuration en forme de L.

6. Dispositif de pesage et de convoyage selon l'une quelconque des revendications précédentes, **caractérisé en ce que** la zone de pied (20) respective présente une face supérieure (34) en biais s'écartant de la zone de retenue (22).

7. Dispositif de pesage et de convoyage selon l'une quelconque des revendications précédentes, **caractérisé en ce que** les traverses (50) présentent au moins à l'extérieur des zones de fixation pour éléments de pose (12) un contour extérieur (52) sans arête.

8. Dispositif de pesage et de convoyage selon l'une quelconque des revendications précédentes, **caractérisé en ce que** les éléments de pose (12) présentent un équipement fileté destiné à l'insertion ou au passage de zones filetées des traverses (50).

9. Dispositif de pesage et de convoyage selon l'une quelconque des revendications précédentes, **caractérisé par** au moins un équipement d'armoire (58), lequel est fixé à des éléments de pose (12) opposés, et en particulier en ce que des éléments de traverse (60), lesquels sont fixés aux éléments de pose, sont disposés sur l'équipement d'armoire (58).

10. Dispositif de pesage et de convoyage selon l'une quelconque des revendications précédentes, **caractérisé par** au moins un équipement de détection de métal (86) et/ou au moins un dispositif de poussée et/ou au moins un dispositif de tri, lequel est fixé aux zones de chanfrein (36).

11. Dispositif de pesage et de convoyage selon l'une quelconque des revendications précédentes, **caractérisé en ce que** l'équipement de pesage et de convoyage (14) présente un équipement de convoyage (66), sur lequel un produit à peser peut être transporté, et un équipement de pesage (68), par l'intermédiaire duquel le poids du produit à peser sur l'équipement de convoyage (14) peut être déterminé, et en particulier **en ce que** l'équipement de convoyage (66) présente une bande de transport (70).

12. Dispositif de pesage et de convoyage selon la revendication 11, **caractérisé en ce qu'**un corps d'équipement de convoyage (72) et/ou un corps d'équipement de pesage (74) sont pourvus d'au moins un corps de recouvrement (76) orienté le long de l'équipement de pesage et de convoyage (14), lequel corps recouvre un espace intérieur (78), et en particulier **en ce que** le au moins un corps de recouvrement (76) présente une face supérieure orientée en biais à distance du corps d'équipement de convoyage (72) ou corps d'équipement de pesage (74).

13. Dispositif de pesage et de convoyage selon l'une quelconque des revendications précédentes, **caractérisé par** une structure modulaire.

14. Dispositif de pesage et de convoyage selon l'une quelconque des revendications précédentes, **caractérisé par** un équipement d'étanchéité (126), lequel est disposé sur une zone de raccordement de deux éléments (12 ; 50 ; 124 ; 12).

15. Dispositif de pesage et de convoyage selon l'une quelconque des revendications précédentes, **caractérisé par** des éléments de fermeture (124) pour une fermeture étanche d'ouvertures de fixation (46).
